Europäisches Patentamt

**European Patent Office**

Office européen des brevets

(19)

(11) Veröffentlichungsnummer : **0 168 550**
**B1**

(12)

# EUROPÄISCHE PATENTSCHRIFT

(45) Veröffentlichungstag der Patentschrift :
19.07.89

(21) Anmeldenummer : 85102338.2

(22) Anmeldetag : 01.03.85

(51) Int. Cl.⁴ : **G 01 N 1/28, G 01 N 1/00**

(54) **Vorrichtung zur Probenvorbereitung chemischer Lösungen.**

(30) Priorität : 20.07.84 CH 3546/84

(43) Veröffentlichungstag der Anmeldung :
**22.01.86 Patentblatt 86/04**

(45) Bekanntmachung des Hinweises auf die Patenterteilung : **19.07.89 Patentblatt 89/29**

(84) Benannte Vertragsstaaten :
**DE FR GB IT NL**

(56) Entgegenhaltungen :
EP—A— 0 047 130
EP—A— 0 105 434
DE—A— 1 673 350
DE—B— 1 294 708
US—A— 3 294 490

(73) Patentinhaber : **ZELLWEGER USTER AG**
**Wilstrasse 11**
**CH-8610 Uster (CH)**

(72) Erfinder : **Mastschenko, Alec**
**Le pré Bostel - Vonrupt**
**F-88400 Gérardmer (FR)**

(74) Vertreter : **Dipl.-Phys.Dr. Manitz Dipl.-Ing., Dipl.-Wirtsch. Finsterwald Dipl.-Ing. Grämkow Dipl.-Chem.Dr. Heyn Dipl.-Phys. Rotermund Morgan, B.Sc.(Phys.) Robert-Koch-Strasse 1**
**D-8000 München 22 (DE)**

## Beschreibung

Die Erfindung betrifft eine Vorrichtung zur Probenvorbereitung chemischer Lösungen mittels Zusatz eines Reagenzes zur Probe.

Analytische Messungen an chemischen Lösungen bedürfen einer Probenvorbereitung, insbesondere wenn es sich um Messungen mit ionensensitiven Elektroden oder um Messungen nach dem Prinzip der Amperometrie oder der Photometrie handelt.

Diese Vorbereitung dient der Anpassung des pH-Wertes oder der Ionenstärke oder dem Ablauf chemischer Reaktionen, welche zur Bildung intensiv gefärbter Reaktionsprodukte führen.

Aus der EP-A-0 105 434 ist eine Vorrichtung zur potentiometrischen Analyse chemischer Lösungen bekannt, bei der sich eine Referenzflüssigkeit, die als Elektrolyt für eine Referenzelektrode dient, in einem Behälter befindet, der mit einem den Probenstrom führenden Kanal verbunden ist, wobei diese Verbindung ein Zufließen der Referenzflüssigkeit zum Probenstrom erlaubt. Gemäß dieser Druckschrift wird diese Verbindung zwischen dem Behälter und dem den Probenstrom führenden Kanal durch eine in den Kanal mündende Kapillare gebildet.

Aus der EP-A-0 105 434 ist zudem bekannt, als Verbindung statt einer Kapillare ein Bündel von Hohlfasern oder ein Bündel von Fasern aus Vollmaterial zu verwenden.

Aus der US-A-3 294 490 ist eine Vorrichtung zur Probenvorbereitung chemischer Lösungen mittels Zusatz eines Reagenzes zur Probe bekannt, die aus einem ein Reagenz-Reservoir bildenden Behälter und einem weiteren Behälter, in dem Reagenz und Probe gemischt werden, besteht. Diesem weiteren Behälter wird einerseits über ein Rohr der Probenstrom und andererseits das Reagenz über eine mit dem Reagenz-Reservoir verbundene Kapillare zugeführt, die in diesen Mischbehälter hineinragt. Das in dem Behälter durch das Zufließen der Probe und des Reagenzes gebildete Gemisch fließt anschließend zur Weiterverarbeitung durch eine an der Unterseite des Behälters befindliche Öffnung ab.

Nachteilig bei den bekannten Verfahren ist, daß das Verbindungselement zwischen Reagenz und Probe aus einem Spezialteil besteht und trotzdem störungsanfällig ist, da es leicht verstopfen kann und dadurch der Zufluß des Reagenzes undefiniert wird.

Der Erfindung liegt folglich die Aufgabe zugrunde, eine Vorrichtung zur Probenvorbereitung chemischer Lösungen mittels Zusatzes eines Reagenzes zur Probe zu schaffen, bei dem das Verbindungselement zwischen Reagenz und Probe aus einem billigen, leicht auswechselbaren und die Gefahr des Verstopfens verringernden Teil besteht.

Diese Aufgabe wird erfindungsgemäß dadurch gelöst, daß ein eine Faserspitze in der Art eines Faserschreibstiftes bildendes Kapillarenbündel, das in die den Probenstrom führende Leitung ragt, das Reagenz in geringen Mengen abgibt.

Weitere bevorzugte Ausführungsformen der Erfindung sind in den Unteransprüchen angegeben.

Anhand der Beschreibung und der Figuren werden Ausführungsbeispiele näher erläutert. Dabei zeigt

Fig. 1 eine erste Ausführungsform, bei der das Reagenz aus einem Behälter mit konstanter Füllhöhe zufließt,

Fig. 2 eine vereinfachte Ausführungsform mit einer die Faserspitze und den Reagenzbehälter umfassenden Patrone.

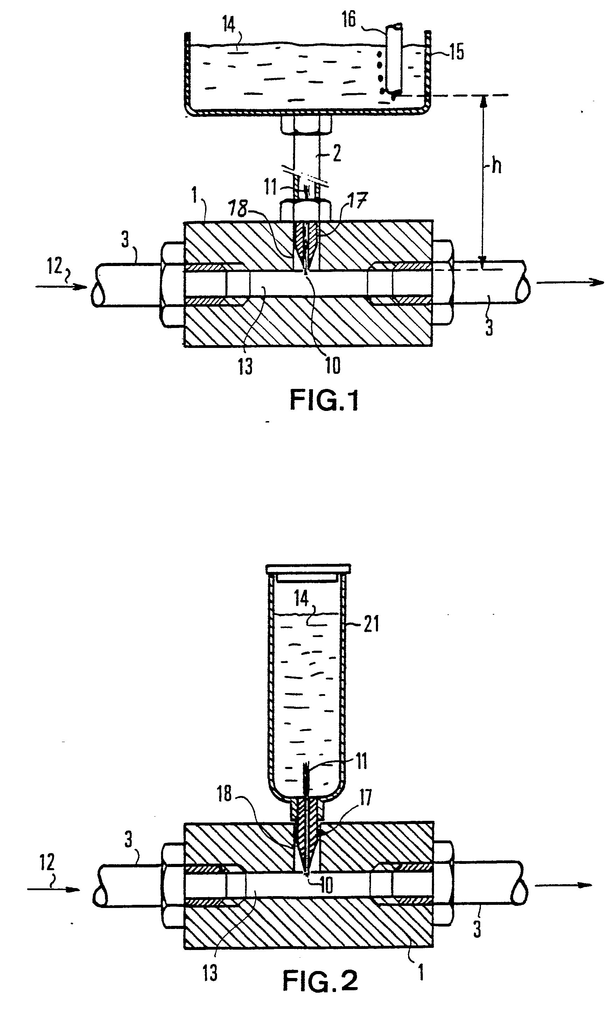

In der Ausführungsform gemäß Fig. 1 ist der Probenstrom 12 mittels Leitung 3 durch ein Gehäuse 1 geführt, in das seitlich eine Hülse 17 in eine Öffnung 18 eingeführt ist. Vorzugsweise ist die Hülse 17 durch Einpressen in die Öffnung 18 gehalten und kann bei Bedarf herausgezogen werden. Die Hülse 17 enthält eine zentrale Bohrung, in die ein Kapillarenbündel 11, bestehend aus einer Anzahl feiner Fasern, eingezogen ist. Dieses Bündel bildet an der Austrittsseite eine Faserspitze 10 nach Art heute üblicher Faserschreibstifte.

An die Hülse 17 schließt eine Leitung 2 an, die zu einem das Reagenz 14 enthaltenden Behälter 15 führt.

Zur Erzielung eines konstanten Drucks an der Faserspitze 10 wird der Behälter 15 mit Vorteil mit einem Niveauregeler versehen, der eine konstante Füllhöhe gewährleistet. Nach einem anderen bekannten System kann eine konstante Füllhöhe auch dadurch erreicht werden, daß ein mit der Außenluft kommunizierendes Rohr 16 in das Reagenz 14 eingetaucht wird. Dadurch wird die Füllhöhe definiert als Differenz zwischen dem Niveau des eingetauchten Endes des Rohres 16 und der Höhe der Faserspitze 10.

In einer vereinfachten Ausführungsform gemäß Fig. 2 ist die Faserspitze 10 samt ihrer das Kapillarenbündel 11 umfassenden Hülse 17 mit einem Behälter, in dem sich das Reagenz 14 befindet, als Patrone 21 ausgebildet, die als Ganzes in die Öffnung 18 des Gehäuses 1 eingesteckt werden kann. Bei Erschöpfung des Reagenzvorrates wird die leere Patrone 21 lediglich gegen eine neue, volle ausgetauscht.

## Patentansprüche

1. Vorrichtung zur Probenvorbereitung chemischer Lösungen mittels Zusatz eines Reagenzes (14) zur Probe, gekennzeichnet durch ein eine Faserspitze (10) in der Art eines Faserschreibstiftes bildendes Kapillarenbündel (11), das in die den Probenstrom (12) führende Leitung (13) ragt und das Reagenz (14) in geringen Mengen abgibt.

2. Vorrichtung nach Anspruch 1, dadurch gekennzeichnet, daß sich das Reagenz (14) in einem Behälter (15) befindet, der mit einer Niveauregelung zur Konstanthaltung des Druckes an der Faserspitze (10) versehen ist.

3. Vorrichtung nach Anspruch 2, dadurch gekennzeichnet, daß die Niveauregelung als ein in das Reagenz tauchendes, mit der Atmosphäre kommunizierendes Rohr (16) ausgebildet ist.

4. Vorrichtung nach Anspruch 1, dadurch gekennzeichnet, dass die Faserspitze (10) in einer Hülse (17) gefasst und in eine Oeffnung (18) eines Gehäuses (1), durch das die Probenleitung (3) geführt ist, lösbar eingesetzt ist.

5. Vorrichtung nach den Ansprüchen 1 und 4, dadurch gekennzeichnet, dass als Reagenzvorrat eine Patrone (21), die mit der Faserspitze (10) verbunden ist, verwendbar ist.

## Claims

1. Apparatus for the sample preparation of chemical solutions by means of the addition of a reagent (14) to the sample, characterised by a capillary bundle (11) which forms a fibre tip (10) in the manner of a fibre tip pen, which projects into the line (13) carrying the sample flow (12) and dispenses the reagent (14) in small quantities.

2. Apparatus in accordance with claim 1, characterised in that the reagent (14) is located in a container (15) which is provided with a level regulating device to keep the pressure at the fibre tip (10) constant.

3. Apparatus in accordance with claim 2, characterised in that the level regulating device is formed as a tube (16) which dips into the reagent and communicates with the atmosphere.

4. Apparatus in accordance with claim 1, characterised in that the fibre tip (10) is held in a sleeve (17) and is releasably inserted into an opening (18) of the housing (1) through which the sample duct (3) is led.

5. Apparatus in accordance with the claims 1 and 4, characterised in that a cartridge 21 which is connected with the fibre tip (10) is usable as the supply of reagent.

## Revendications

1. Dispositif pour préparer des échantillons de solutions chimiques, moyennant l'addition d'un réactif (14) à l'échantillon, caractérisé par un faisceau de capillaires (11), qui constitue une pointe de fibre (10) à la manière d'un stylo-feutre, qui pénètre dans la conduite (13) amenant l'écoulement (12) de l'échantillon et délivre le réactif (14) en de faibles quantités.

2. Dispositif selon la revendication 1, caractérisé en ce que le réactif (14) est situé dans un récipient (15), qui comporte un dispositif de régulation de niveau, servant à maintenir constante la pression au niveau de la pointe de fibre (10).

3. Dispositif selon la revendication 2, caractérisé en ce que le dispositif de régulation de niveau est réalisé sous la forme d'un tube (16), qui plonge dans le réactif et communique avec l'atmosphère.

4. Dispositif selon la revendication 1, caractérisé en ce que la pointe de fibre (10) est entourée par une douille (17) et est insérée, de façon amovible, dans une ouverture (18) d'un boîtier (1), dans lequel s'étend le conduit (3) véhiculant l'échantillon.

5. Dispositif selon les revendications 1 et 4, caractérisé en ce que l'on peut utiliser, comme réserve de réactif, une cartouche (21), qui est reliée à la pointe de fibre (10).

FIG.1

FIG.2